# EUROPÄISCHE PATENTANMELDUNG

(11) **EP 4 266 473 A1**
(43) Veröffentlichungstag der Anmeldung: **25.10.2023**
(21) Anmeldenummer: 22169551.3
(22) Anmeldetag: 22.04.2022
(51) Int. Cl.: H01M 50/434, H01M 50/451, H01M 50/463, H01M 10/058, H01M 10/0587, H01M 50/403

(54) **LITHIUM-IONEN-ZELLE MIT GEWICKELTEM ELEKTRODEN-SEPARATOR-VERBUND UND VERFAHREN ZU DEREN HERSTELLUNG**

(71) Anmelder: VARTA Microbattery GmbH, 73479 Ellwangen Jagst (DE)
(72) Erfinder: Beck, Bernd, 86754 Munningen (DE); Ensling, David, 73479 Ellwangen (DE); Fürst, Martin, 73492 Rainau-Schwabsberg (DE); Pytlik, Edward, 73479 Ellwangen (DE)
(74) Vertreter: Ostertag & Partner Patentanwälte mbB

(57) **Zusammenfassung**

Es wird eine Lithium-Ionen-Energiespeicherzelle (1) vorgeschlagen, die einen Elektroden-Separator-Verbund (100) aus mindestens einer positiven Elektrode, mindestens einer negativen Elektrode und mindestens einem Separator umfasst. Die positive Elektrode ist bandförmig ausgebildet und umfasst einen bandförmigen Kathodenstromkollektor (110) mit einer Beschichtung aus einem positiven Elektrodenmaterial (111). Die negative Elektrode ist bandförmig ausgebildet und umfasst einen bandförmigen Anodenstromkollektor (120) mit einer Beschichtung aus einem negativen Elektrodenmaterial (121). Der Elektroden-Separator-Verbund (100) ist als zylindrischer Wickel mit zwei endständigen Stirnseiten ausgebildet und umfasst die Elektroden in spiralförmig aufgewickelter Form. Der mindestens eine Separator umfasst mindestens ein Separatorband (130, 140), das zwischen der positiven und der negativen Elektrode angeordnet ist und die Elektroden voneinander trennt. Das Separatorband (130, 140) weist eine erste und eine zweite Flachseite auf, die jeweils einer der Elektroden zugewandt sind, sowie einen ersten Längsrand und einen zweiten Längsrand. Die vorgeschlagene Energiespeicherzelle zeichnet sich weiter dadurch aus, dass das Separatorband (130, 140) auf einer seiner Flachseiten zumindest bereichsweise eine Beschichtung aus einem anorganischen Nichtleiter aufweist und dass mindestens einer der Längsränder (131, 141) des Separatorbandes (130, 140) zumindest in einem Abschnitt eingerollt ist.

## Beschreibung

Die vorliegende Erfindung betrifft eine Lithium-Ionen-Energiespeicherzelle mit einem Elektroden-Separator-Verbund in Form eines zylindrischen Wickels und ein Verfahren zu deren Herstellung.

### ANWENDUNGSGEBIET UND STAND DER TECHNIK

Elektrochemische Energiespeicherelemente sind dazu in der Lage, gespeicherte chemische Energie durch eine Redoxreaktion in elektrische Energie umzuwandeln. Die einfachste Form eines elektrochemischen Energiespeicherelements ist die elektrochemische Zelle. Sie umfasst eine positive und eine negative Elektrode, die von einem Separator voneinander getrennt sind. Bei einer Entladung werden an der negativen Elektrode durch einen Oxidationsprozess Elektronen freigesetzt. Hieraus resultiert ein Elektronenstrom, der von einem externen elektrischen Verbraucher abgegriffen werden kann, für den die elektrochemische Zelle als Energielieferant dient. Zugleich kommt es zu einem der Elektrodenreaktion entsprechenden lonenstrom innerhalb der Zelle. Dieser lonenstrom durchquert den Separator und wird durch einen ionenleitenden Elektrolyten ermöglicht.

Wenn die Entladung reversibel ist, also die Möglichkeit besteht, die bei der Entladung erfolgte Umwandlung von chemischer Energie in elektrische Energie wieder umzukehren und die Zelle wieder zu laden, spricht man von einer sekundären Zelle. Die bei sekundären Zellen allgemein übliche Bezeichnung der negativen Elektrode als Anode und die Bezeichnung der positiven Elektrode als Kathode bezieht sich auf die Entladefunktion der elektrochemischen Zelle.

Für viele Anwendungen werden als Energiespeicherelemente heute sekundäre Lithium-Ionen-Zellen eingesetzt, da diese Zellen hohe Ströme bereitstellen können und sich durch eine vergleichsweise hohe Energiedichte auszeichnen. Sie basieren auf dem Einsatz von Lithium, welches in Form von Ionen zwischen den Elektroden der Zelle hin und her wandern kann. Die negative Elektrode und die positive Elektrode einer Lithium-Ionen-Zelle werden in der Regel von sogenannten Kompositelektroden gebildet, die neben elektrochemisch aktiven Komponenten auch elektrochemisch inaktive Komponenten umfassen.

Als elektrochemisch aktive Komponenten (Aktivmaterialien) für sekundäre Lithium-Ionen-Zellen kommen prinzipiell sämtliche Materialien in Frage, die Lithium-Ionen aufnehmen und wieder abgeben können. Für die negative Elektrode werden hierfür beispielsweise Partikel auf Kohlenstoffbasis, wie beispielsweise graphitischer Kohlenstoff, eingesetzt. Als Aktivmaterialien für die positive Elektrode können beispielsweise Lithiumcobaltoxid (LiCoO₂), Lithiummanganoxid (LiMn₂O₄), Lithiumeisenphosphat (LiFePO₄) oder Derivate hiervon eingesetzt werden. Die elektrochemisch aktiven Materialien sind in der Regel in Partikelform in den Elektroden enthalten.

Als elektrochemisch inaktive Komponenten umfassen die Kompositelektroden im Allgemeinen einen flächigen und/oder bandförmigen Stromkollektor, beispielsweise eine metallische Folie, der als Träger für das jeweilige Aktivmaterial bzw. das entsprechende Elektrodenmaterial dient. Der Stromkollektor für die negative Elektrode (Anodenstromkollektor) kann beispielsweise aus Kupfer oder Nickel und der Stromkollektor für die positive Elektrode (Kathodenstromkollektor) beispielsweise aus Aluminium gebildet sein. Weiterhin können die Elektroden als elektrochemisch inaktive Komponenten einen Elektrodenbinder (z. B. Polyvinylidenfluorid (PVDF) oder ein anderes Polymer, beispielsweise Carboxymethylzellulose), leitfähigkeitsverbessernde Additive und andere Zusätze umfassen. Der Elektrodenbinder gewährleistet die mechanische Stabilität der Elektroden und häufig auch die Haftung des Aktivmaterials auf den Stromkollektoren.

Als Elektrolyten umfassen Lithium-Ionen-Zellen in der Regel Lösungen von Lithiumsalzen wie Lithiumhexafluorophosphat (LiPF₆) in organischen Lösungsmitteln (z. B. Ether und Ester der Kohlensäure).

Die Kompositelektroden werden im Allgemeinen bei der Herstellung einer Lithium-Ionen-Zelle mit einem oder mehreren Separatoren zu einem Elektroden-Separator-Verbund kombiniert. Hierbei werden die Elektroden und Separatoren oft, allerdings keinesfalls zwingend, unter Druck, gegebenenfalls auch durch Lamination oder durch Verklebung, miteinander verbunden. Die grundsätzliche Funktionsfähigkeit der Zelle kann dann durch Tränkung des Verbunds mit dem Elektrolyten hergestellt werden.

In vielen Ausführungsformen wird der Elektroden-Separator-Verbund in Form eines Wickels gebildet oder zu einem Wickel verarbeitet. Im ersten Fall werden beispielsweise eine bandförmige positive Elektrode und eine bandförmige negative Elektrode sowie mindestens ein bandförmiger Separator separat einer Wickelmaschine zugeführt und in dieser zu einem Wickel mit der Sequenz positive Elektrode / Separator / negative Elektrode spiralförmig aufgewickelt. Im zweiten Fall werden eine bandförmige positive Elektrode und eine bandförmige negative Elektrode sowie mindestens ein bandförmiger Separator zunächst zu einem Elektroden-Separator-Verbund kombiniert, beispielsweise unter Anwendung des erwähnten Drucks. In einem weiteren Schritt wird dann der Verbund aufgewickelt.

Für Anwendungen im Automobilbereich, für E-Bikes oder auch für andere Anwendungen mit hohem Energiebedarf, wie z.B. in Werkzeugen, werden Lithium-Ionen-Zellen mit möglichst hoher Energiedichte benötigt, die gleichzeitig in der Lage sind, mit hohen Strömen beim Laden und Entladen belastet zu werden.

Häufig sind Zellen für die genannten Anwendungen als zylindrische Rundzellen ausgebildet, beispielsweise mit dem Formfaktor 21 x 70 (Durchmesser mal Höhe in mm). Zellen dieser Art umfassen in der Regel einen Elektroden-Separator-Verbundkörper in Form eines Wickels. Moderne Lithium-Ionen-Zellen dieses Formfaktors können bereits eine Energiedichte von bis zu 270 Wh/kg erreichen.

In der WO 2017/215900 A1 sind zylindrische Rundzellen beschrieben, bei denen der Elektroden-Separator-Verbund sowie dessen Elektroden bandförmig ausgebildet sind und in Form eines Wickels vorliegen. Die Elektroden weisen jeweils mit Elektrodenmaterial beladene bzw. beschichtete bandförmige Stromkollektoren auf. Entgegengesetzt gepolte Elektroden sind innerhalb des Elektroden-Separator-Verbunds versetzt zueinander angeordnet, so dass Längsränder der Stromkollektoren der positiven Elektroden an einer Seite und Längsränder der Stromkollektoren der negativen Elektroden an einer gegenüberliegenden Seite aus dem Wickel austreten. Zur elektrischen Kontaktierung der Stromkollektoren weisen die Zellen Blechteile auf, die flach auf den Stirnseiten des Wickels aufsitzen und mit den Längsrändern der Stromkollektoren durch Verschweißung verbunden sind. Dadurch ist es möglich, die Stromkollektoren und damit auch die dazugehörigen Elektroden über ihre gesamte Länge elektrisch zu kontaktieren. Zellen mit derart kontaktierten Wickeln weisen einen deutlich reduzierten Innenwiderstand auf. Das Auftreten großer Ströme kann in der Folge sehr viel besser abgefangen und auch Wärme kann besser aus dem Wickel abgeführt werden.

Sowohl im Rahmen der Herstellung derartiger Zellen als auch während des Betriebs derartiger Zellen, insbesondere bei der Ladung und Entladung, kann es zum Eindringen von verschiedenen Partikeln, insbesondere von elektrisch leitenden Partikeln, in den wickelförmigen Elektroden-Separator-Verbund kommen. Ein besonders kritischer Bereich hierbei sind die Stirnseiten des Wickels, da hier zum Teil offene Bereiche vorliegen. Beispielsweise kann es zur Ausschwemmung von Rußpartikeln oder Graphit aus den Elektroden kommen, die sich in den Elektrodenzwischenräumen ablagern. Weiterhin kann es im Rahmen der Fertigung und Montage der Zellen zu einem Eindringen von Partikeln, beispielsweise von metallischen Partikeln, in den Elektroden-Separator-Verbund kommen.

Diese Partikel können dazu führen, dass die Elektrodenpolaritäten überbrückt werden, sodass es zu Feinschlüssen kommen kann. Im Extremfall kann hierdurch ein Kurzschluss auftreten, der mit einem Ausfall der Zelle verbunden sein kann. Insgesamt stellt dieses Eindringen von verschiedenen Partikeln in den Elektroden-Separator-Verbund ein nicht unerhebliches Sicherheitsrisiko für die Zellen dar.

### AUFGABE UND LÖSUNG

Vor diesem Hintergrund stellt sich die Erfindung die Aufgabe, eine verbesserte Lithium-Ionen-Energiespeicherzelle bereitzustellen, die dieses Sicherheitsrisiko durch in den Elektroden-Separator-Verbund eindringende Partikel vermeidet oder zumindest minimiert. Weiterhin stellt sich die Erfindung die Aufgabe, ein Verfahren zur Herstellung einer solchen verbesserten Lithium-Ionen-Energiespeicherzelle anzugeben, das in der Praxis sehr gut umsetzbar ist.

Diese Aufgabe wird durch eine Lithium-Ionen-Energiespeicherzelle und ein Verfahren zur Herstellung einer solchen Lithium-Ionen-Energiespeicherzelle, wie sie in den unabhängigen Ansprüchen angegeben sind, gelöst. Bevorzugte Ausgestaltungen dieser Energiespeicherzelle bzw. des Herstellungsverfahrens ergeben sich aus den abhängigen Ansprüchen.

Die erfindungsgemäße Lithium-Ionen-Energiespeicherzelle zeichnet sich zunächst durch die folgenden Merkmale aus:
a. Die Lithium-Ionen-Energiespeicherzelle umfasst einen Elektroden-Separator-Verbund aus mindestens einer positiven Elektrode, mindestens einer negativen Elektrode und mindestens einem Separator;
b. Die positive Elektrode ist bandförmig ausgebildet und umfasst einen bandförmigen Kathodenstromkollektor mit einer Beschichtung aus einem positiven Elektrodenmaterial;
c. Die negative Elektrode ist bandförmig ausgebildet und umfasst einen bandförmigen Anodenstromkollektor mit einer Beschichtung aus einem negativen Elektrodenmaterial;
d. Der Elektroden-Separator-Verbund ist als zylindrischer Wickel mit zwei endständigen Stirnseiten ausgebildet und umfasst die Elektroden in spiralförmig aufgewickelter Form;
e. Der mindestens eine Separator umfasst mindestens ein Separatorband, das zwischen der positiven und der negativen Elektrode angeordnet ist und die Elektroden voneinander trennt; und
f. das mindestens eine Separatorband weist eine erste und eine zweite Flachseite auf, die jeweils einer der Elektroden zugewandt sind, sowie einen ersten Längsrand und einen zweiten Längsrand.

Dabei ist die Energiespeicherzelle erfindungsgemäß durch die folgenden zusätzlichen Merkmale gekennzeichnet:
g. Das Separatorband weist auf einer seiner Flachseiten zumindest bereichsweise eine Beschichtung aus einem anorganischen Nichtleiter auf; und
h. mindestens einer der Längsränder des Separatorbandes ist zumindest in einem Abschnitt eingerollt.

Der grundsätzliche Aufbau des wickelförmigen Elektroden-Separator-Verbunds dieser erfindungsgemäßen Lithium-Ionen-Energiespeicherzelle ist mit dem Aufbau eines Elektroden-Separator-Verbunds einer herkömmlichen Zelle, wie sie beispielsweise in der WO 2017/215900 A1 beschrieben ist, vergleichbar. Der maßgebliche Unterschied der erfindungsgemäßen Zelle gegenüber einer solchen herkömmlichen Zelle liegt darin, dass die Stirnseiten oder zumindest eine der Stirnseiten des wickelförmigen Elektroden-Separator-Verbunds derart modifiziert sind, dass das oder die Längsränder des oder der Separatorbänder, die sich an einer oder beiden Stirnseiten des zylindrischen Wickels befinden, deformiert und insbesondere zumindest teilweise eingerollt sind. Hierdurch wird ein teilweise oder vollständiger Verschluss der Stirnseiten des Wickels erreicht, so dass das Eindringen von Partikeln in das Innere des Elektroden-Separator-Verbunds minimiert oder vollständig verhindert wird. Damit können Fein- und/oder Kurzschlüsse durch elektrisch leitende Partikel, die in den Elektroden-Separator-Verbund eindringen könnten, zuverlässig verhindert. Insofern wird durch die erfindungsgemäße Maßnahme das Sicherheitslevel der Lithium-Ionen-Zellen maßgeblich erhöht.

Wie im Zusammenhang mit dem nachfolgend beschriebenen bevorzugten Herstellungsverfahren für die erfindungsgemäßen Energiespeicherzellen noch näher erläutert wird, wird dieses Einrollen der Längsränder des oder der Separatorbänder insbesondere durch eine thermische Behandlung erreicht, wobei das oder die Separatorbänder zumindest teilweise mit einer Beschichtung aus einem anorganischen Nichtleiter versehen sind. Hierbei kann es sich beispielsweise um eine keramische Beschichtung handeln. Besonders bevorzugt ist es dabei, wenn sich diese keramische Beschichtung zumindest in den Bereichen der Längsränder der Separatorbänder auf ausschließlich einer der Flachseiten des jeweiligen Separatorbandes befindet. Diese einseitige Beschichtung führt bei einer thermischen Behandlung dazu, dass durch diese einseitige Beschichtung sich der Längsrand des Separatorbandes in vorhersehbarer und definierter Weise einrollt, so dass es zu einer regelmäßig ausgebildeten Struktur in den stirnseitigen Bereichen des Wickels kommt, die einen Verschluss der Wickelstirnseite(n) bewirkt. Durch die erfindungsgemäße Maßnahme wird also ein gezielter und kontrollierter, vollständiger oder teilweiser Verschluss des Wickels erreicht.

Die Beschichtung mit einem anorganischen Nichtleiter und das Einrollen das oder der Längsränder des oder der Separatorbandes/Separatorbänder hat neben der eher mechanischen Funktion zur Abdichtung der Stirnseite(n) des Wickels auch eine elektrisch isolierende Funktion. Weiterhin kann die Beschichtung und das Einrollen der Längsränder auch eine mechanisch stabilisierende Funktion für den Elektroden-Separator-Verbund ausüben.

Die Stromkollektoren der erfindungsgemäßen Energiespeicherzelle dienen dazu, im jeweiligen Elektrodenmaterial enthaltene elektrochemisch aktive Komponenten möglichst großflächig elektrisch zu kontaktieren. Insbesondere bestehen die bandförmigen Stromkollektoren aus einer Metallfolie oder sind zumindest oberflächlich metallisiert.

Bei der als Lithium-Ionen-Zelle ausgebildeten erfindungsgemäßen Energiespeicherzelle eignen sich als Metall für den Anodenstromkollektor beispielsweise Kupfer oder Nickel oder auch andere elektrisch leitfähige Materialien, insbesondere Kupfer- und Nickellegierungen oder mit Nickel beschichtete Metalle. Als Kupferlegierung können insbesondere Werkstoffe vom Typ EN CW-004A bzw. EN CW-008A mit einem Kupferanteil von mindestens 99,9% eingesetzt werden. Als Nickellegierungen kommen insbesondere Legierungen vom Typ NiFe, NiCu, CuNi, NiCr und NiCrFe in Frage. Auch Edelstahl kommt grundsätzlich in Frage, beispielsweise vom Typ 1.4303 oder 1.4404 oder vom Typ SUS304.

Als Metall für den Kathodenstromkollektor eignen sich für die erfindungsgemäße Lithium-Ionen-Zelle insbesondere Aluminium oder auch andere elektrisch leitfähige Materialien, darunter auch Aluminiumlegierungen.

Geeignete Aluminiumlegierungen für den Kathodenstromkollektor sind beispielsweise Al-Legierungen vom Typ 1235, 1050, 1060, 1070, 3003, 5052, Mg3, Mg212 (Serie 3000) und GM55. Weiterhin geeignet sind AISi, AlCuTi, AlMgSi, AlSiMg, AlSiCu, AlCuTiMg und AlMg. Der Aluminiumanteil besagter Legierungen liegt bevorzugt oberhalb von 99,5 %.

Die erfindungsgemäße Energiespeicherzelle kann ein an sich für solche Zellen übliches metallisches Gehäuse aufweisen. Ein Gehäuse für eine erfindungsgemäße Zelle in Form einer zylindrischen Rundzelle umfasst zweckmäßigerweise einen Gehäusebecher, der zur Aufnahme des gewickelten Elektroden-Separator-Verbunds dient, sowie ein Deckelbauteil, das die Öffnung des Gehäusebechers verschließt. Bei dem Gehäusebecher kann es sich beispielsweise um ein tiefgezogenes Bauteil, beispielsweise aus vernickeltem Stahl oder Edelstahl, mit einer Wandstärke in einem Bereich zwischen 0,1 mm - 2 mm handeln. Zwischen dem Deckelbauteil und dem Gehäusebecher ist zweckmäßigerweise eine Dichtung angeordnet, die zum einen der Abdichtung des Zellgehäuses dient, zum anderen aber auch die Funktion hat, das Deckelbauteil und den Gehäusebecher elektrisch voneinander zu isolieren. Die Dichtung wird zur Montage beispielsweise auf den Rand des Deckelbauteils aufgezogen. Zum Verschluss der Rundzellen kann der Öffnungsrand des Gehäusebechers radial nach innen über den von der Dichtung umschlossenen Rand des Deckelbauteils umgebogen werden (Bördelprozess), so dass das Deckelbauteil einschließlich der Dichtung in der Öffnung des Gehäusebechers formschlüssig fixiert ist.

Für die Montage der Zellen wird im Allgemeinen zunächst der Elektroden-Separator-Verbund hergestellt, bevor der Elektroden-Separator-Verbund in einem separaten Arbeitsschritt in das zylindrische und metallische Gehäuse eingesetzt wird, das anschließend verschlossen wird.

Der Elektrodenwickel selbst kann zunächst insbesondere auf einer Wickelmaschine hergestellt und anschließend zu einer separaten Montagelinie transportiert und in eine Becher-Halbteil, das beispielsweise aus vernickeltem Stahl oder Edelstahl gebildet ist, eingebracht werden.

In anderen Ausführungsformen kann es vorgesehen sein, dass das Gehäuse beispielsweise durch die mehrfache Wicklung einer Metallfolie hergestellt wird.

In bevorzugten Ausgestaltungen der erfindungsgemäßen Lithium-Ionen-Energiespeicherzelle zeichnet sich die Zelle durch mindestens eines der folgenden zusätzlichen Merkmale aus:
a. Der Anodenstromkollektor und der Kathodenstromkollektor weisen jeweils einen ersten Längsrand und einen zweiten Längsrand auf;
b. Der Anodenstromkollektor weist einen streifenförmigen Hauptbereich, der mit einer Schicht aus dem negativen Elektrodenmaterial beladen ist, sowie einen freien Randstreifen, der sich entlang des ersten Längsrands erstreckt und der nicht mit dem Elektrodenmaterial beladen ist, auf;
c. Der Kathodenstromkollektor weist einen streifenförmigen Hauptbereich, der mit einer Schicht aus dem positiven Elektrodenmaterial beladen ist, sowie einen freien Randstreifen, der sich entlang des ersten Längsrands erstreckt und der nicht mit dem Elektrodenmaterial beladen ist, auf;
d. Die negative Elektrode und die positive Elektrode sind derart ausgebildet und/oder innerhalb des Elektroden-Separator-Verbunds zueinander angeordnet, dass der freie Randstreifen des Anodenstromkollektors eine der endständigen Stirnseiten und/oder der freie Randstreifen des Kathodenstromkollektors die andere der endständigen Stirnseiten des zylindrischen Wickels bilden.

Vorzugsweise sind die vorgenannten Merkmale a. bis c. und besonders bevorzugt die vorgenannten Merkmale a. bis d. in Kombination miteinander verwirklicht.

Besonders bevorzugt ist es gemäß dem vorgenannten Merkmal d., dass der freie Randstreifen des Anodenstromkollektors auf der einen endständigen Stirnseite und der freie Randstreifen des Kathodenstromkollektors auf der anderen der endständigen Stirnseite des zylindrischen Wickels die jeweilige Stirnseite bilden. Der besondere Vorteil hierbei liegt darin, dass eine Kontaktierung der jeweiligen Elektroden über diese freien Randstreifen der Stromkollektoren erfolgen kann. Diese Kontaktierung kann beispielsweise über Blechteile bzw. Kontaktbauteile erfolgen, die auf einer oder beiden Stirnseiten des Wickels aufsitzen und die mit den Längsrändern der Stromkollektoren beispielsweise durch Verschweißung verbunden sind. Mit einem solchen Design der Zellen ist ein deutlich reduzierter Innenwiderstand verbunden, so dass große Ströme sehr gut abgefangen und Wärme besser aus dem Wickel abgefangen werden kann.

In besonders bevorzugten Weiterbildungen bei diesen Ausgestaltungen der erfindungsgemäßen Energiespeicherzelle zeichnet sich die Zelle durch mindestens eines der folgenden zusätzlichen Merkmale aus:
a. Der als zylindrischer Wickel ausgebildete Elektroden-Separator-Verbund weist eine Stirnseite auf, die von einem Längsrand des Anodenstromkollektors, insbesondere dem freien Randstreifen des Anodenstromkollektors, oder die von einem Längsrand des Kathodenstromkollektors, insbesondere dem freien Randstreifen des Kathodenstromkollektors, gebildet wird;
b. Ein Längsrand des Anodenstromkollektors, insbesondere der freie Randstreifen des Anodenstromkollektors, und/oder ein Längsrand des Kathodenstromkollektors, insbesondere der freie Randstreifen des Kathodenstromkollektors, schließen einen Spalt mit spiralförmiger Geometrie ein;
c. Der eingerollte Längsrand des Separatorbandes ist in dem Spalt mit spiralförmiger Geometrie angeordnet und verschließt damit die von dem jeweiligen Längsrand des Anodenstromkollektors oder des Kathodenstromkollektors gebildete Stirnseite.

In besonders bevorzugter Weise sind die vorgenannten Merkmale a., b. und c. in Kombination miteinander verwirklicht.

Hierbei kann es vorgesehen sein, dass sich der eingerollte Längsrand des Separatorbandes nur auf einer Stirnseite des wickelförmigen Elektroden-Separator-Verbunds befindet. In besonders bevorzugter Weise befindet sich auf beiden Stirnseiten des wickelförmigen Elektroden-Separator-Verbunds jeweils ein eingerollter Längsrand eines Separatorbandes. Hierbei kann es sich bevorzugt um die eingerollten Längsränder von zwei Separatorbändern handeln. Weiterhin ist es auch möglich, dass die beiden Längsränder eines Separatorbandes an den beiden Stirnseiten des Wickels eingerollt sind.

In der Ausführungsform mit eingerollten Längsrändern von einem oder mehreren Separatorbändern auf beiden Stirnseiten des wickelförmigen Elektroden-Separator-Verbunds wird auf beiden Stirnseiten des Wickels ein Eindringen von Partikeln zuverlässig verhindert, so dass insbesondere bei dieser Ausführungsform die Gefahr von Fein- und/oder Kurzschlüssen durch eindringende Partikel besonders zuverlässig verhindert oder zumindest stark minimiert wird.

In besonders bevorzugter Weise ist der mindestens eine Längsrand des mindestens einen Separatorbandes über seine gesamte Länge eingerollt. Das heißt also, dass die gesamte jeweilige Stirnseite, an der der Längsrand des Separatorbandes spiralförmig verläuft, durch die Einrollung des Längsrandes des Separatorbandes im Prinzip vollständig verschlossen ist, so dass Partikeln in das Innere des Elektroden-Separator-Verbunds nicht mehr eindringen können.

Bei der Fertigung einer erfindungsgemäßen Lithium-Ionen-Energiespeicherzelle ist es in diesem Zusammenhang besonders vorteilhaft, wenn dieser Verschluss der Stirnseiten des Wickels relativ früh im Herstellungsprozess erfolgt, insbesondere bereits unmittelbar nach der Ausbildung des Wickels. Der Vorteil liegt hierbei darin, dass der Wickel frühzeitig im Herstellungsverfahren geschützt ist.

In bevorzugten Ausgestaltungen der erfindungsgemäßen Lithium-Ionen-Energiespeicherzelle zeichnet sich die Zelle durch mindestens eines der folgenden zusätzlichen Merkmale aus:
a. Der mindestens eine Separator umfasst das Separatorband mit dem zumindest abschnittsweise eingerollten Längsrand als erstes Separatorband;
b. Der mindestens eine Separator umfasst ein zweites Separatorband, das zwischen der positiven und der negativen Elektrode angeordnet ist und die Elektroden voneinander trennt;
c. Das zweite Separatorband weist eine erste und eine zweite Flachseite auf, die jeweils einer der Elektroden zugewandt sind, sowie einen ersten Längsrand und einen zweiten Längsrand; und
d. Auch das zweite Separatorband weist auf einer seiner Flachseiten zumindest bereichsweise eine Beschichtung aus einem anorganischen Nichtleiter auf;
e. Mindestens einer der Längsränder des zweiten Separatorbandes ist zumindest in einem Abschnitt eingerollt.

Vorzugsweise sind die vorgenannten Merkmale a. bis e. in Kombination miteinander verwirklicht.

Diese Ausführungsform der erfindungsgemäßen Energiespeicherzelle zeichnet sich also insbesondere dadurch aus, dass mindestens zwei Separatorbänder in dem Elektroden-Separator-Verbund vorgesehen sind, die die positive Elektrode und die negative Elektrode voneinander trennen. Die Sequenz innerhalb des wickelförmigen Elektroden-Separator-Verbunds kann dabei insbesondere folgendermaßen gebildet sein: Separatorband/positive Elektrode/Separatorband/negative Elektrode oder, alternativ, Separatorband/negative Elektrode/Separatorband/positive Elektrode.

Sowohl das erste Separatorband als auch das zweite Separatorband zeichnen sich dadurch aus, dass insbesondere auf nur einer ihrer Flachseiten zumindest bereichsweise eine Beschichtung mit einem anorganischen Nichtleiter vorgesehen ist. Vorzugsweise sind dabei zumindest einer oder beide Längsränder des jeweiligen Separatorbandes einseitig beschichtet, wobei auch eine vollflächige Beschichtung der Separatorbänder auf jeweils einer Seite vorgesehen sein kann. Die eingerollten Längsränder des ersten und des zweiten Separatorbandes können sich dabei auf einer oder auf beiden Stirnseiten des wickelförmigen Elektroden-Separator-Verbunds befinden.

In besonders bevorzugten Ausgestaltungen der Lithium-Ionen-Energiespeicherzelle mit einem Wickel, der mindestens zwei Separatorbänder umfasst, zeichnet sich die Zelle durch mindestens eines der zusätzlichen Merkmale aus:
a. Der Kathodenstromkollektor und der Anodenstromkollektor weisen jeweils einen ersten Längsrand und einen zweiten Längsrand auf;
b. Der Kathodenstromkollektor weist einen streifenförmigen Hauptbereich, der mit einer Schicht aus dem positiven Elektrodenmaterial beladen ist, sowie einen freien Randstreifen, der sich entlang des ersten Längsrands erstreckt und der nicht mit dem Elektrodenmaterial beladen ist, auf;
c. Der Anodenstromkollektor weist einen streifenförmigen Hauptbereich, der mit einer Schicht aus dem negativen Elektrodenmaterial beladen ist, sowie einen freien Randstreifen, der sich entlang des ersten Längsrands erstreckt und der nicht mit dem Elektrodenmaterial beladen ist, auf;
d. Die negative Elektrode und die positive Elektrode sind derart ausgebildet und/oder innerhalb des Elektroden-Separator-Verbunds zueinander angeordnet, dass der freie Randstreifen des Anodenstromkollektors aus einer der endständigen Stirnseiten und der freie Randstreifen des Kathodenstromkollektors aus der anderen der endständigen Stirnseiten des Elektroden-Separator-Verbunds austreten;
e. Der freie Randstreifen des Kathodenstromkollektors schließt einen ersten Spalt mit spiralförmiger Geometrie ein;
f. Der eingerollte Längsrand des ersten Separatorbandes ist in dem ersten Spalt mit spiralförmiger Geometrie angeordnet und verschließt damit die von dem Randstreifen des Kathodenstromkollektors gebildete Stirnseite des Elektroden-Separator-Verbunds;
g. Der freie Randstreifen des Anodenstromkollektors schließt einen zweiten Spalt mit spiralförmiger Geometrie ein;
h. Der eingerollte Längsrand des zweiten Separatorbandes ist in dem zweiten Spalt mit spiralförmiger Geometrie angeordnet und verschließt damit die von dem Randstreifen des Anodenstromkollektors gebildete Stirnseite des Elektroden-Separator-Verbunds.

In besonders bevorzugter Weise sind die vorgenannten Merkmale a. bis h. in Kombination miteinander verwirklicht.

In dieser Ausführungsform ragt auf einer Stirnseite des wickelförmigen Elektroden-Separator-Verbunds der von Elektrodenmaterial freie Randstreifen des Anodenstromkollektors und auf der gegenüberliegenden Stirnseite der von Elektrodenmaterial freie Randstreifen des Anodenstromkollektors heraus bzw. die jeweiligen Stirnseiten werden von diesem freien Randstreifen gebildet. Die freien Randstreifen der Stromkollektoren stehen somit für eine Kontaktierung der jeweiligen Elektroden im Prinzip über ihre gesamte Länge zur Verfügung. Die beiden Separatorbänder sind dabei so in dem Elektroden-Separator-Verbund angeordnet, dass der eingerollte Längsrand des einen Separatorbandes die Stirnseite auf der einen Seite des Wickels verschließt und der eingerollte Längsrand des zweiten bzw. anderen Separatorbandes die gegenüberliegende Stirnseite des Elektroden-Separator-Verbunds verschließt.

Im Hinblick auf die Beschichtung des Separatorbandes oder der Separatorbänder mit dem anorganischen Nichtleiter zeichnet sich die erfindungsgemäße Lithium-Ionen-Energiespeicherzelle in bevorzugten Ausgestaltungen durch mindestens eines der folgenden zusätzlichen Merkmale aus:
a. Das mindestens eine Separatorband weist ausschließlich auf einer seiner Flachseiten die Beschichtung aus dem anorganischen Nichtleiter auf;
b. Das mindestens eine Separatorband weist ausschließlich entlang einem seiner Längsränder die Beschichtung aus dem anorganischen Nichtleiter auf;
c. Das mindestens eine Separatorband weist ausschließlich eine Flachseite auf, die vollflächig mit dem anorganischen Nichtleiter beschichtet ist.

In bevorzugten Ausgestaltungen sind entweder die vorgenannten Merkmale a. und b. oder die vorgenannten Merkmale a. und c. in Kombination miteinander verwirklicht.

Das vorgenannte Merkmal a., gemäß dem ausschließlich eine der Flachseiten des Separatorbandes mit dem anorganischen Nichtleiter beschichtet ist, ist besonders vorteilhaft. Durch diese einseitige Beschichtung wird das Einrollen des Längsrandes des Separatorbandes bei der Bereitstellung des wickelförmigen Elektroden-Separator-Verbunds in besonders kontrollierter und reproduzierbarer Weise allein durch eine thermische Behandlung des Wickels bzw. der jeweiligen Stirnseite des Wickels erreicht.

Eine Beschichtung ausschließlich im Bereich einer der Längsränder des Separatorbandes gemäß dem vorgenannten Merkmal b. ist für das Einrollen des jeweiligen Längsrandes im Zuge der Herstellung der erfindungsgemäßen Zelle im Prinzip ausreichend. Eine vollflächige Beschichtung der jeweiligen Seite des Separatorbandes gemäß dem vorgenannten Merkmal c. kann jedoch bevorzugt sein. Dies bietet Vorteile für das Beschichtungsverfahren, da die Beschichtung mit weniger Aufwand durchgeführt werden kann.

Die Beschichtung des oder der Separatorbänder mit dem anorganischen Nichtleiter kann gegebenenfalls auch nur in einem Teilabschnitt, bezogen auf die Länge des Separatorbandes, vorgesehen sein. Besonders bevorzugt ist jedoch eine Beschichtung über die gesamte Länge des Separatorbandes, wobei gegebenenfalls nur der längsrandige Bereich des Separatorbandes, aber dann über die gesamte Länge des Separatorbandes, beschichtet ist.

In weiteren bevorzugten Ausgestaltungen der erfindungsgemäßen Lithium-Ionen-Energiespeicherzelle zeichnet sich die Zelle durch mindestens eines der folgenden zusätzlichen Merkmale aus:
a. Die Beschichtung aus dem anorganischen Nichtleiter befindet sich auf der Flachseite des Separatorbandes, die der positiven Elektrode zugewandt ist;
b. Die Beschichtung aus dem anorganischen Nichtleiter befindet sich auf der Flachseite des Separatorbandes, die der negativen Elektrode zugewandt ist;
c. Der Längsrand des Separatorbandes ist derart eingerollt, dass die Beschichtung aus dem anorganischen Nichtleiter nach außen weist.

Wenn beispielsweise zwei Separatorbänder in dem Elektroden-Separator-Verbund vorgesehen sind, kann es vorgesehen sein, dass die einseitige Beschichtung des einen Separatorbandes der positiven Elektrode und die einseitige Beschichtung des anderen Separatorbandes der negativen Elektrode zugewandt ist oder umgekehrt. Es kann auch vorgesehen sein, dass auch bei zwei Separatorbändern die einseitige Beschichtung jeweils der positiven Elektrode oder jeweils der negativen Elektrode zugewandt ist. Besonders bevorzugt ist es dabei, wenn die einseitige Beschichtung der Separatorbänder jeweils der positiven Elektrode zugewandt ist.

Klassisch werden keramische Beschichtungen bei Separatoren eingesetzt, um diese insgesamt gegen thermische Beanspruchungen zu stabilisieren. Vorliegend dient die Beschichtung aus dem anorganischen Nichtleiter dagegen dazu, einen Teilbereich des Separators unter thermischer Beanspruchung gezielt zu verformen. Die Beschichtung aus dem anorganischen Nichtleiter stabilisiert lediglich die Seite, auf die sie aufgebracht ist. Die andere Seite zieht sich dagegen bei erhöhten Temperaturen leicht zusammen und bewirkt das Einrollen des Separatorrandes.

In Hinblick auf die Materialien für die Beschichtung des Separatorbandes zeichnet sich die erfindungsgemäße Lithium-Ionen-Energiespeicherzelle vorzugsweise durch das folgende zusätzliche Merkmal aus:
a. Die Beschichtung aus dem anorganischen Nichtleiter umfasst ein Material oder umfasst eine Kombination von Materialien, das/die aus der folgenden Gruppe ausgewählt ist/sind: keramisches Material, glaskeramisches Material, Glas, Lithiumionen-leitendes keramisches Material, oxidisches Material, metalloxidisches Material, Aluminiumoxid, Titanoxid, Titannitrid, Titanaluminiumnitrid, Siliziumoxid, Siliziumdioxid, Titancarbonitrid.

Es ist dabei möglich, dass eines oder gegebenenfalls auch zwei oder mehr dieser Materialien für die Beschichtung verwendet werden.

Keramische Materialien sind besonders bevorzugt. Unter keramischen Materialien sind insbesondere Carbide, Nitride, Oxide, Silicide oder Mischungen und Derivate dieser Verbindungen zu verstehen.

Insbesondere können glaskeramische Materialien eingesetzt werden, die beispielsweise kristalline Teilchen umfassen, die in eine amorphe Glasphase eingebettet sind. Mit dem Begriff Glas ist dabei grundsätzlich jedes anorganische Glas gemeint, das eine thermische Stabilität aufweist und das vorteilhafterweise gegenüber dem in der erfindungsgemäßen Zelle vorhandenen Elektrolyten chemisch stabil ist.

Als Beschichtungsmaterial für das oder die Separatorbänder eignen sich mit besonderem Vorteil beispielsweise Aluminiumoxid, Titanoxid und Siliziumdioxid, da sich diese Materialien durch ihre besonders geeigneten thermoplastischen Eigenschaften auszeichnen.

Besonders bevorzugt wird die Beschichtung aus dem anorganischen Nichtleiter mittels Abscheidung aus der Gasphase, insbesondere mittels eines PVD-Verfahrens (PVD = Physical Vapour Deposition), auf dem mindestens einen Separatorband gebildet. Besonders geeignet ist beispielsweise SALD (Spatial Atomic Layer Deposition).

In alternativen bevorzugten Ausführungsformen kann zur Bildung der Beschichtung aus dem anorganischen Nichtleiter auch eine Beschichtungszusammensetzung, welche neben dem anorganischen Nichtleiter weiterhin einen Binder umfasst, der den anorganischen Nichtleiter auf dem mindestens einen Separatorband fixiert, eingesetzt werden. Als Binder eignen sich bevorzugt kunststoffbasierte Binder, beispielsweise aus der Gruppe mit PVA (Polyvinylalkohol), PVDF (Polyvinylidenfluorid) und SBR (Styrol-Butadien-Rubber).

In besonders bevorzugten Ausgestaltungen der erfindungsgemäßen Lithium-Ionen-Energiespeicherzelle zeichnet sich die Zelle durch das folgende zusätzliche Merkmal aus:
a. Die Lithium-Ionen-Energiespeicherzelle umfasst mindestens ein Kontaktbauteil, das flach auf einer Stirnseite des als zylindrischer Wickel ausgebildeten Elektroden-Separator-Verbunds aufsitzt.

Das Kontaktbauteil kann insbesondere auf dem die jeweilige Stirnseite bildenden freien Randstreifen des Anodenstromkollektors oder dem die jeweilige Stirnseite des Wickels bildenden freien Randstreifen des Kathodenstromkollektors aufsitzen und dabei zur Kontaktierung der jeweiligen Elektrode genutzt werden.

Ein solches Kontaktbauteil, beispielsweise ein flächiges Blechteil in Form einer Scheibe oder ähnliches, kann auf einer oder gegebenenfalls auf beiden Stirnseiten des Wickels vorgesehen sein. Insbesondere kann sowohl die positive Elektrode als auch die negative Elektrode unter Verwendung eines solchen Kontaktbauteils direkt oder indirekt mit dem Gehäuse kontaktiert sein. Es kann jedoch auch vorgesehen sein, dass eine Kontaktierung mittels eines solchen Kontaktbauteils nur auf einer Seite des Wickels bzw. nur für eine der Elektroden verwendet wird und die andere Elektrode beispielsweise über einen metallischen Kontaktstreifen (interner Ableiter) oder ähnliches mit dem Gehäuse kontaktiert wird.

In besonders bevorzugten Ausführungsformen wird auf solche internen Ableiter verzichtet und die Kontaktierung der Elektroden erfolgt über die Längsränder der Stromkollektorbänder an den Wickelstirnseiten über die erwähnten Kontaktbauteile. Die Stirnseiten des Wickels können dementsprechend über die Kontaktbauteile, die mit entsprechenden Ableitern mit dem Gehäuse verbunden werden, oder mit den Kontaktbauteilen, die direkt mit dem Gehäuse verbunden werden, elektrisch angeschlossen werden.

Die Erfindung umfasst weiterhin ein Verfahren zur Herstellung einer Lithium-Ionen-Energiespeicherzelle gemäß der obigen Beschreibung. Dieses Verfahren umfasst die folgenden Schritte:
a. Bereitstellung von mindestens einer bandförmigen positiven und mindestens einer bandförmigen negativen Elektrode, wobei die bandförmige positive Elektrode einen bandförmigen Kathodenstromkollektor mit einer Beschichtung aus einem positiven Elektrodenmaterial und die bandförmige negative Elektrode einen bandförmigen Anodenstromkollektor mit einer Beschichtung aus einem negativen Elektrodenmaterial umfasst;
b. Bereitstellung von mindestens einem Separatorband mit einer ersten Flachseite und mit einer zweiten Flachseite, wobei das Separatorband auf einer seiner Flachseiten zumindest bereichsweise eine Beschichtung aus einem anorganischen Nichtleiter aufweist;
c. Bildung eines als zylindrischer Wickel ausgebildeten Elektroden-Separator-Verbunds aus den Elektrodenbändern, wobei das mindestens eine Separatorband zwischen der positiven und der negativen Elektrode angeordnet wird, so dass es die Elektroden voneinander trennt;
d. Einbringen des Elektroden-Separator-Verbunds in ein zylindrisches Gehäuse, wobei der Elektroden-Separator-Verbund axial in dem Gehäuse angeordnet wird.

Erfindungsgemäß ist dieses Verfahren dadurch gekennzeichnet, dass
e. der Elektroden-Separator-Verbund einer Wärmebehandlung unterzogen wird, derart, dass sich mindestens ein Längsrand des mindestens einen Separatorbandes zumindest abschnittsweise einrollt.

Kernpunkt des erfindungsgemäßen Verfahrens ist das vorgenannte Merkmal e., wonach der wickelförmige Elektroden-Separator-Verbund einer Wärmebehandlung unterzogen wird, so dass sich mindestens ein Längsrand des mindestens einen Separatorbandes zumindest abschnittsweise einrollt.

Dieses Einrollen eines Längsrands eines Separatorbandes kann auf einer oder auf beiden Stirnseiten des Elektroden-Separator-Verbunds vorgesehen sein, so dass entweder eine oder beide Stirnseiten des wickelförmigen Elektroden-Separator-Verbunds der Wärmebehandlung unterzogen werden. Wichtig für das Einrollen des Längsrandes des Separatorbandes ist dessen Beschichtung mit einem anorganischen Nichtleiter. Hierbei sind keramische Materialien besonders bevorzugt. Besonders vorteilhaft ist es dabei, wenn sich diese Beschichtung ausschließlich auf einer Seite des Separatorbandes befindet, und es sich also um eine einseitige Beschichtung handelt. Diese Beschichtung befindet sich vorzugsweise zumindest im Bereich des jeweiligen Längsrandes des Separatorbandes, kann aber auch vollflächig eine Flachseite des Separatorbandes bedecken. Durch diese Beschichtung, insbesondere durch diese einseitige Beschichtung des Separatorbandes, wird mittels der Wärmebehandlung ein gezieltes und kontrolliertes Einrollen des jeweiligen Längsrandes erreicht. Die einseitige Beschichtung führt dabei dazu, dass sich der Längsrand des Separatorbandes, der eine spiralförmige Geometrie aufweist, vorzugweise über dessen gesamte Länge in vollständiger und regelmäßiger Weise in eine Richtung einrollt, sodass in einer Schnittansicht des Wickels alle eingerollten Seitenrandabschnitte die gleiche Orientierung aufweisen.

Bei dem anorganischen Material für die Beschichtung des Separatorbandes handelt es sich insbesondere um ein thermoplastisches Material. Durch die Erwärmung erfährt das Material eine thermische Verformung, wodurch es aufgrund der herrschenden Zugkräfte durch das Separatorband zu einem Einrollen und damit zu einem Verschluss der offenen Bereiche an der/den Stirnseite(n) des Elektroden-Separator-Verbunds kommt.

Das oder die Separatorbänder selbst sind vorzugsweise temperaturstabil. Lediglich die Beschichtung des Separatorbandes ist thermoplastisch.

Bei dem Separatorband selbst handelt es sich um ein elektrisch isolierendendes Flächengebilde, beispielsweise um eine Folie, ein Gewebe oder ein Flies, beispielsweise aus Kunststoff. Dieser Kunststoff kann beispielsweise eine Dicke in einem Bereich von 5 µm bis 50 µm, bevorzugt in einem Bereich von 10 µm bis 30 µm, aufweisen, je noch Dimensionierung der erfindungsgemäßen Energiespeicherzelle. Wenn das Separatorband von einer Kunststofffolie gebildet wird, kann diese Folie beispielsweise aus Polyolefin oder Polyetherketon gebildet sein.

Die Dicke der Beschichtung des Separatorbandes mit dem anorganischen Nichtleiter liegt beispielsweise in einem Bereich von 0,5 µm bis 5 µm.

Bevorzugt handelt es sich bei dem Anodenstromkollektor und/oder dem Kathodenstromkollektor jeweils um eine bandförmige Metallfolie mit einer Dicke im Bereich von 4 µm bis 30 µm.

Das Anodenstromkollektorband, das Kathodenstromkollektorband und das oder die Separatorbänder der erfindungsgemäßen Zelle weisen bevorzugt die folgenden Dimensionen auf:
- Eine Länge im Bereich von 0,5 m bis 25 m;
- Eine Breite im Bereich 40 mm bis 145 mm.

Bei der Herstellung des wickelförmigen Elektroden-Separator-Verbunds ist es vorzugsweise vorgesehen, dass das oder die Separatorbänder vor der Wärmebehandlung die gleiche Breite wie die Elektrodenbänder bzw. die Stromkollektorbänder aufweisen. Durch die stirnseitige Wärmebehandlung nach der Wicklung des Elektroden-Separator-Verbunds rollen sich der oder die Längsränder des oder der Separatorbänder derart ein, dass der eingerollte Abschnitt des oder der Separatorbänder zwischen dem äußeren Ende der jeweiligen Stromkollektoren und dem mit Elektrodenmaterial beschichteten Hauptbereich der Elektrodenbänder befindet.

Die Beschichtung des Separatorbandes erfolgt bevorzugt vor der eigentlichen Wicklung des Elektroden-Separator-Verbunds. Diese Wicklung der Elektrodenbänder und des oder der Separatorbänder selbst erfolgt in an sich bekannter Weise bevorzugt auf einer Wickelmaschine, in der die entsprechenden Elektrodenbänder und Separatorbänder zugeführt werden. In anderen Ausführungsformen kann zunächst ein Verbund aus den Elektrodenbändern und dem oder den Separatorbändern hergestellt werden, bevor der Verbund der Wickelmaschine zugeführt wird.

Nach oder während des Einbringens des Elektroden-Separator-Verbunds in ein zylindrisches Gehäuse erfolgt in an sich bekannter Weise eine Kontaktierung der Elektroden mit dem Gehäuse, beispielsweise mittels eines oder zwei der bereits erläuterten Kontaktbauteile, das oder die auf einer oder gegebenenfalls auf beiden Stirnseiten des zylindrischen Wickels angebracht werden können. Auch das Einbringen von Elektrolyt und das Schließen des Gehäuses kann in an sich bekannter Weise erfolgen.

Als Gehäuse kann ein herkömmliches metallisches Gehäuse, das im Prinzip einen Gehäusebecher und einen Deckel umfasst, verwendet werden. In anderen Ausgestaltungen kann das Gehäuse auch auf andere Weise gebildet werden, beispielsweise durch eine Wicklung von Metallfolien oder anderem.

In besonders bevorzugten Ausgestaltungen des erfindungsgemäßen Verfahrens ist mindestens eines der folgenden zusätzlichen Merkmale vorgesehen:
a. Für die Wärmebehandlung wird eine Temperatur in einem Bereich zwischen 200 °C und 700 °C angewendet;
b. Die Wärmebehandlung erfolgt unter Verwendung von Heißluft und/oder Infrarotstrahlung und/oder einem Laserstrahl.

Je nach Material und Art der Beschichtung und je nach Material und Dicke des oder Separatorbänder kann die Wärmebehandlung insbesondere im Hinblick auf die Temperatur und die Dauer der Wärmebehandlung angepasst werden.

Prozesstechnisch können für die Wärmebehandlung der Stirnseiten des Elektroden-Separator-Verbunds beispielsweise Heißluft-Gebläse, Infrarot-Lampen oder Laserstrahlen eingesetzt werden. Diese Behandlung des wickelförmigen Elektroden-Separator-Verbunds erfolgt bevorzugt unmittelbar nach der Bildung des Wickels, beispielsweise noch auf der Wickelmaschine. Dies hat den Vorteil, dass der Wickel frühzeitig vor gegebenenfalls eindringenden Partikeln geschützt ist.

In einer besonders bevorzugten Ausgestaltung des erfindungsgemäßen Verfahrens zeichnet sich das Verfahren durch mindestens eines der folgenden zusätzlichen Merkmale aus:
a. Der Kathodenstromkollektor der positiven Elektrode und/oder der Anodenstromkollektor der negativen Elektrode weisen einen freien Randstreifen entlang einem ihrer Längsränder auf, der nicht mit dem Elektrodenmaterial beschichtet ist;
b. Nach der Bildung des Elektroden-Separator-Verbunds bildet der freie Randstreifen des Kathodenstromkollektors und/oder der freie Randstreifen des Anodenstromkollektors eine der Stirnseiten des zylindrischen Wickels;
c. Zur elektrischen Kontaktierung der positiven Elektrode und/oder der negativen Elektrode wird ein Kontaktbauteil flach auf den freien Randstreifen des Kathodenstromkollektors und/oder des Anodenstromkollektors aufgelegt und dort fixiert;
d. Das Fixieren erfolgt durch Schweißen, insbesondere durch Laserschweißen.

Vorzugsweise sind die vorgenannten Merkmale a. bis d. in Kombination miteinander verwirklicht.

Wie weiter oben bereits in Zusammenhang mit den Merkmalen der Energiespeicherzelle selbst erläutert wurde, kann ein solches Kontaktbauteil auf einer oder gegebenenfalls auf beiden Stirnseiten des wickelförmigen Elektroden-Separator-Verbunds vorgesehen sein. Das oder die Kontaktbauteil(e) können anschließend über einen zusätzlichen Ableiter oder gegebenenfalls direkt mit den Gehäusekomponenten verbunden werden.

Eine Fixierung des oder der Kontaktbauteile an der oder den Stirnseite(n) des Wickels erfolgt bevorzugt noch im Bereich der Wickelmaschine, bevor der Elektroden-Separator-Verbunds gegebenenfalls zu einer separaten Montagelinie für den Zusammenbau des Gehäuses transportiert wird.

Eine Fixierung des Kontaktbauteils mittels Schweißen und insbesondere mittels Laserschweißen ist besonders bevorzugt. Über eine solche Kontaktierungsmethode können die freien Randbereiche der Stromkollektoren, die in dem Wickel spiralförmig die Stirnseiten bilden, sehr präzise und lokal begrenzt mit dem jeweiligen Kontaktbauteil kontaktiert werden, indem definierte Materialverbindungen hergestellt werden. So ist es möglich, über die gesamte, spiralförmige Elektrodenlänge einen sehr geringen Abstand der punktuellen Kontaktierungsbereiche im Sinne einer sogenannten Multi-Pin-Kontaktierung einzuhalten und damit eine quasi-kontinuierliche Kontaktierung zu erzielen. Prinzipiell ist sogar eine kontinuierliche Kontaktierung über die gesamte spiralförmige Länge der Elektrodenbänder möglich.

In ganz besonders bevorzugter Weise ist bei dem erfindungsgemäßen Verfahren mindestens eines der folgenden zusätzlichen Merkmale vorgesehen:
a. Die Wärmebehandlung erfolgt über eine Einkopplung von Wärme über das Kontaktbauteil;
b. Die Wärmebehandlung erfolgt im Zuge der Kontaktierung der mindestens einen Elektrode.

Vorzugsweise sind die vorgenannten Merkmale a. und b. in Kombination miteinander realisiert.

Eine Wärmebehandlung gemäß dem erfindungsgemäßen Konzept über eine Einkopplung von Wärme über das oder die Kontaktbauteile ist besonders vorteilhaft, da eine solche Wärmeeinkopplung sehr gleichmäßig erfolgen kann. Dabei muss lediglich das Kontaktbauteil, das beispielsweise die Form einer Platte aufweist und ein metallisches Bauteil ist, erwärmt werden. Durch die gleichmäßige Einkopplung von Wärme in die Stirnseite des Wickels erfolgt das Einrollen des/des Längsrandes/Längsränder in besonders regelmäßiger und reproduzierbarer Weise. Besonders vorteilhaft ist es dabei, wenn das Kontaktbauteil die jeweilige Stirnseite des Wickels vollständig bedeckt.

Mit besonderem Vorteil kann die Wärmebehandlung im Zuge der Kontaktierung des mindestens einen Elektrodenbandes erfolgen. In dieser Ausführungsform werden also in einem Arbeitsschritt sowohl die elektrische Anbindung der jeweiligen Elektrode als auch das Verschließen der jeweiligen Stirnseite in einem Arbeitsschritt erreicht. Dem liegt zugrunde, dass bei dem Aufschweißen des Kontaktbauteils an der Stirnseite, mit dem bevorzugt die Kontaktierung der Elektrode erfolgt, in der Regel ausreichend Wärme entsteht, um den gewünschten Effekt des Einrollens des spiralförmigen Längsrandes des Separatorbandes zu bewirken. In dieser Ausführungsform ist es also nicht zwingend erforderlich, dass die Wärmebehandlung für das Einrollen in einem separaten Schritt durchgeführt wird.

Bezüglich weiterer Merkmale des erfindungsgemäßen Verfahrens wird auch auf die obige Beschreibung im Zusammenhang mit den Merkmalen der erfindungsgemäßen Energiespeicherzelle verwiesen.

Schließlich umfasst die Erfindung eine Lithium-Ionen-Energiespeicherzelle, die nach dem beschriebenen Verfahren herstellbar ist. Bei dieser erfindungsgemäßen Lithium-Ionen-Energiespeicherzelle zeichnet sich der wickelförmige Elektroden-Separator-Verbund dadurch aus, dass einer oder beide stirnseitigen Bereiche des Wickels durch eine thermische Verformung der jeweiligen Längsränder des oder der Separatorbänder eingerollt sind. Die hierdurch verschlossenen Stirnseiten oder die hierdurch verschlossene Stirnseite des wickelförmigen Elektroden-Separator-Verbunds schützt den Elektroden-Separator-Verbund vor eindringenden Partikeln, die gegebenenfalls einen Feinschluss oder Kurzschluss der Zelle bewirken können. Bezüglich weiterer Merkmale dieser Energiespeicherzelle wird auch auf die obige Beschreibung verwiesen.

Weitere Merkmale und Vorteile der Erfindung ergeben sich aus der nachfolgenden Beschreibung von bevorzugten Ausführungsbeispielen in Verbindung mit den Zeichnungen. Hierbei können die einzelnen Merkmale jeweils für sich oder in Kombination miteinander verwirklicht sein.

### KURZBESCHREIBUNG DER ZEICHNUNGEN

In den Figuren zeigen:
- Figur 1: schematische Darstellung eines Längsschnitts durch eine erfindungsgemäße Lithium-Ionen-Energiespeicherzelle, und
- Figur 2: Röntgendarstellung eines Ausschnitts aus dem stirnseitigen Bereich eines wickelförmigen Elektroden-Separator-Verbunds gemäß der Erfindung.

### DETAILLIERTE BESCHREIBUNG DER AUSFÜHRUNGSBEISPIELE

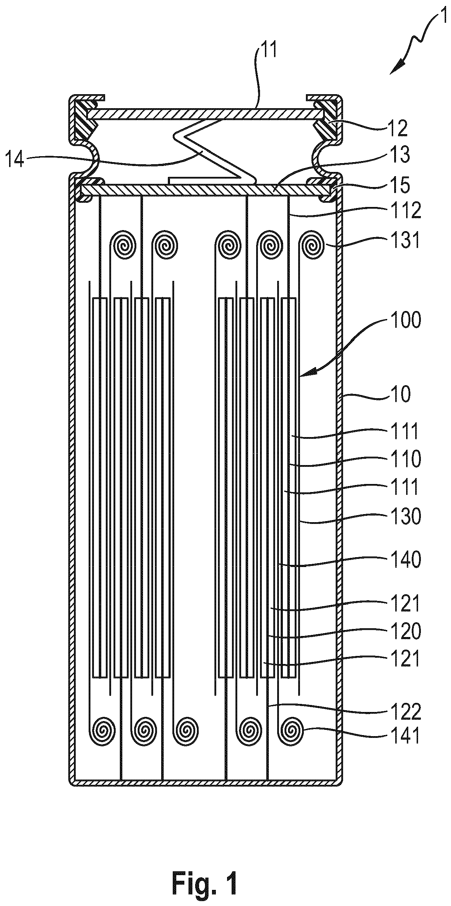

**Fig. 1** zeigt einen schematischen Längsschnitt durch eine erfindungsgemäße Lithium-Ionen-Energiespeicherzelle 1 in Form einer zylindrischen Rundzelle. Die Energiespeicherzelle 1 umfasst ein metallisches Gehäuse, das aus einem Gehäusebecher 10 und einem Gehäusedeckel 11 gebildet ist. Zwischen Gehäusebecher 10 und Deckel 11 ist eine Dichtung 12 vorgesehen, beispielsweise in Form eines umlaufenden Dichtungsrings.

Im zentralen Innenraum des Energiespeicherzelle 1 befindet sich ein Elektroden-Separatoren-Verbund 100, der als zylindrischer Wickel mit einer endständigen Stirnseite im oberen Bereich und im unteren Bereich der Zelle ausgebildet ist. Der wickelförmige Elektroden-Separator-Verbund 100 ist aus einer bandförmigen positiven Elektrode und einer bandförmigen negativen Elektrode gebildet, wobei die Elektroden durch Separatorbänder 130 und 140 voneinander getrennt sind. Die positive Elektrode umfasst einen bandförmigen Kathodenstromkollektor 110, der beidseitig von einem positiven Elektrodenmaterial 111 beschichtet ist. Die negative Elektrode umfasst einen Anodenstromkollektor 120, der beidseitig von einem negativen Elektrodenmaterial 121 beschichtet ist.

In diesem Ausführungsbeispiel sind die Elektroden so ausgebildet, dass der jeweilige Stromkollektor 110, 120 jeweils einen streifenförmigen Hauptbereich mit einer beidseitigen Schicht aus dem jeweiligen Elektrodenmaterial 111, 121 aufweist. Darüber hinaus weist der Kathodenstromkollektor 110 einen freien Randstreifen 112 auf, der sich entlang eines Längsrandes des Kathodenstromkollektors erstreckt und der nicht mit dem Elektrodenmaterial beschichtet ist. Auch der Anodenstromkollektor 120 weist entlang eines seiner Längsränder einen freien Randstreifen 122 auf, der nicht mit Elektrodenmaterial beschichtet ist. Der freie Randstreifen 112 des Kathodenstromkollektors befindet sich in dieser Darstellung im Bereich der oberen Stirnseite des wickelförmigen Elektroden-Separator-Verbunds 100 und der freie Randstreifen 122 des Anodenstromkollektors im Bereich der gegenüberliegenden Stirnseite des Elektroden-Separator-Verbunds 100. Über diese freien Randstreifen 112 bzw. 122 der Stromkollektoren erfolgt in diesem Ausführungsbeispiel die elektrische Kontaktierung der Elektroden.

Der freie Randstreifen 122 des Anodenstromkollektors ist mit dem Boden des Gehäusebechers 10 elektrisch verbunden. Der freie Randstreifen 112 des Kathodenstromkollektors ist mit einem Kontaktbauteil 13 elektrisch verbunden, wobei dieses Kontaktbauteil 13 beispielsweise in Form einer metallischen Scheibe oder Platte auf der entsprechenden Stirnseite des Elektroden-Separator-Verbunds 100 aufliegt. Über einen Ableiter 14 ist das Kontaktbauteil 13 mit dem Deckel 11 des Gehäuses verbunden. Weiterhin ist eine elektrische Isolierung 15 zwischen dem Kontaktbauteil 13 und dem umgebenden Gehäusebecher 10 vorgesehen.

Der wickelförmige Elektroden-Separator-Verbund 100 ist so ausgebildet, dass sich zwischen dem positiven Elektrodenband und dem negativen Elektrodenband die Separatorbänder 130, 140 befinden, die die Elektroden gegeneinander isolieren.

Der Kern der Erfindung liegt darin, dass die Separatorbänder 130 und 140 an den Stirnseiten des zylinderförmigen Elektroden-Separator-Verbunds 100 herausragen und in diesen längsseitigen Bereichen 131 und 141 eingerollt sind und eine regelmäßige Struktur ausbilden. Diese Verformung der Längsränder der Separatorbänder 130, 140 bewirkt an der jeweiligen Stirnseite des Elektroden-Separator-Verbunds 100 einen weitgehenden oder vollständigen Verschluss der offenen Bereiche des wickelförmigen Elektroden-Separator-Verbunds 100, was hier schematisch angedeutet ist. Durch diese Deformation der längsseitigen Bereiche der Separatorbänder 130, 140 wird erreicht, dass keine elektrisch leitenden Partikel in das Innere des Elektroden-Separator-Verbunds 100 eindringen können. Solche Partikel könnten gegebenenfalls zu einem Feinschluss oder Kurzschluss durch eine Überbrückung der Elektrodenpolaritäten führen. Dies wird durch die erfindungsgemäße Maßnahme vermieden.

Die Struktur der Längsränder 131, 140 der Separatorbänder wird insbesondere durch eine thermische Verformung dieser Bereiche der Separatorbänder erreicht. Die gezielte und reproduzierbare Verformung der Längsränder der Separatorbänder wird insbesondere durch eine einseitige Beschichtung der Separatorbänder mit einem anorganischen Nichtleiter, insbesondere mit einem thermoplastischen, keramischen Material erreicht. Der Übersichtlichkeit halber ist diese einseitige Beschichtung in Fig. 1 nicht dargestellt.

Während einer thermischen Behandlung zur Erzeugung dieser Strukturen wird die Beschichtung auf den Separatorbändern thermisch verformt und schrumpft dabei, sodass sich die Längsränder der Separatorbänder aufrollen.

Die vorzugsweise einseitige Beschichtung der Separatorbänder kann sich auf die längsseitigen Bereiche der Separatorbänder beschränken. In bevorzugten Ausführungsformen sind die Separatorbänder vollflächig auf jeweils einer Seite mit dem anorganischen Nichtleiter beschichtet.

In dem in Fig. 1 gezeigten Ausführungsbeispiel ragen der aufgerollte Längsrand 131 des Separatorbandes 130 im Bereich der oberen Stirnseite und der aufgerollte Längsrand 141 des anderen Separatorbandes 140 auf der gegenüberliegenden Stirnseite des Elektroden-Separator-Verbunds über die mit Elektrodenmaterial beschichteten Hauptbereiche der Elektrodenbänder hervor. Auf diese Weise wird durch das Einrollen der jeweils herausragenden Längsränder 131, 141 ein Verschluss des Elektroden-Separator-Verbunds 100 auf beiden Stirnseiten des resultieren Wickels erreicht.

Zwischen den eingerollten Längsrändern 131, 141 der Separatorbänder stehen in den stirnseitigen Bereichen des Wickels die Längsränder der Stromkollektoren 112, 122 hervor, die für eine Kontaktierung der Elektroden zur Verfügung stehen.

Während des Herstellungsprozesses der erfindungsgemäßen Energiespeicherzelle 1 werden vorteilhafterweise mehr oder weniger unmittelbar nach der Herstellung des gewickelten Elektroden-Separator-Verbunds 100 die Stirnseiten des Wickels einer thermischen Behandlung (Wärmebehandlung) unterzogen, sodass sich die Längsränder 131, 141 der Separatorbänder entsprechend einrollen und den Wickel verschließen und damit schützen.

Besonders bevorzugt ist es, wenn die erfindungsgemäße Wärmebehandlung über eine Einkopplung von Wärme über das Kontaktelement 13 erfolgt, indem dieses scheibenförmige metallische Element erhitzt wird und so die Wärme gleichmäßig auf die Stirnseite des Wickels überträgt.

In besonders bevorzugter Weise wird dies mit dem Kontaktierungsprozess der Elektroden verknüpft, wobei die Stromkollektoren über Laserschweißen mit dem Kontaktbauteil 13 oder gegebenenfalls mit dem Boden des Gehäuses 10 elektrisch verbunden werden. Im Allgemeinen ist die bei einem Laserschweißen entstehende Wärme für das erfindungsgemäße Einrollen der Längsränder der Separatorbänder ausreichend.

Unabhängig von der Beschichtung der Separatorbänder kann es vorgesehen sein, dass auch die Stromkollektoren mit einer Beschichtung versehen sind, die insbesondere die Stabilität der Stromkollektoren während des Herstellungsprozesses und insbesondere beim Anschweißen von entsprechenden Kontaktelementen erhöht.

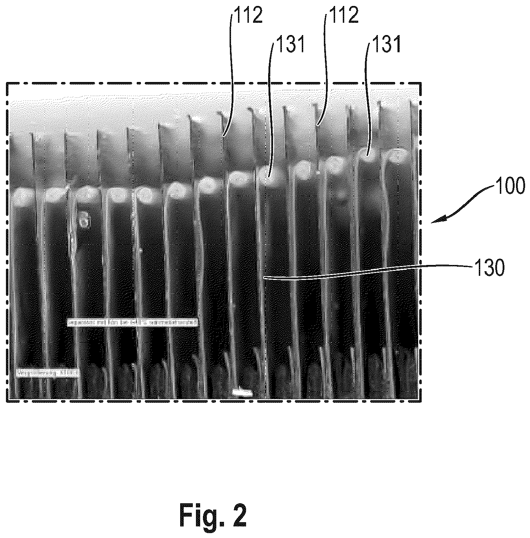

**Fig.** 2 zeigt eine röntgentechnologische Längsschnittaufnahme eines Ausschnitts aus einem stirnseitigen Bereich eines wickelförmigen Elektroden-Separator-Verbunds 100 einer erfindungsgemäßen Energiespeicherzelle. Deutlich zu erkennen sind die regelmäßig aufgerollten Längsränder 131 des Separatorbandes 130. Durch eine einseitige Beschichtung des Separatorbandes 130 wurde eine gleichmäßige und definierte Deformation des spiralförmigen Längsrandes 131 erreicht, der die offenen Bereiche des Elektroden-Separator-Verbunds 100 in diesem stirnseitigen Bereich verschließt.

Darüber hinaus ist in dieser Schnittdarstellung der hervorstehende freie Rand des Stromkollektors 112, beispielsweise des Kathodenstromkollektors, zu erkennen, der die eingerollten Bereiche 131 überragt und der für eine elektrische Kontaktierung der Elektrode zur Verfügung steht.

## Patentansprüche

1. Lithium-Ionen-Energiespeicherzelle (1) mit den folgenden Merkmalen:
a. Die Lithium-Ionen-Energiespeicherzelle umfasst einen Elektroden-Separator-Verbund (100) aus mindestens einer positiven Elektrode, mindestens einer negativen Elektrode und mindestens einem Separator;
b. Die positive Elektrode ist bandförmig ausgebildet und umfasst einen bandförmigen Kathodenstromkollektor (110) mit einer Beschichtung aus einem positiven Elektrodenmaterial (111);
c. Die negative Elektrode ist bandförmig ausgebildet und umfasst einen bandförmigen Anodenstromkollektor (120) mit einer Beschichtung aus einem negativen Elektrodenmaterial (121);
d. Der Elektroden-Separator-Verbund (100) ist als zylindrischer Wickel mit zwei endständigen Stirnseiten ausgebildet und umfasst die Elektroden in spiralförmig aufgewickelter Form;
e. Der mindestens eine Separator umfasst mindestens ein Separatorband (130, 140), das zwischen der positiven und der negativen Elektrode angeordnet ist und die Elektroden voneinander trennt;
f. Das Separatorband (130, 140) weist eine erste und eine zweite Flachseite auf, die jeweils einer der Elektroden zugewandt sind, sowie einen ersten Längsrand und einen zweiten Längsrand;
wobei sich die Energiespeicherzelle durch die folgenden zusätzlichen Merkmale auszeichnet:
g. Das Separatorband (130, 140) weist auf einer seiner Flachseiten zumindest bereichsweise eine Beschichtung aus einem anorganischen Nichtleiter auf; und
h. mindestens einer der Längsränder (131, 141) des Separatorbandes (130, 140) ist zumindest in einem Abschnitt eingerollt.

2. Lithium-Ionen-Energiespeicherzelle nach Anspruch 1 mit mindestens einem der folgenden zusätzlichen Merkmale:
a. Der Anodenstromkollektor (120) und der Kathodenstromkollektor (110) weisen jeweils einen ersten Längsrand und einen zweiten Längsrand auf;
b. Der Anodenstromkollektor (120) weist einen streifenförmigen Hauptbereich, der mit einer Schicht aus dem negativen Elektrodenmaterial (121) beladen ist, sowie einen freien Randstreifen (122), der sich entlang des ersten Längsrands erstreckt und der nicht mit dem Elektrodenmaterial beladen ist, auf;
c. Der Kathodenstromkollektor (110) weist einen streifenförmigen Hauptbereich, der mit einer Schicht aus dem positiven Elektrodenmaterial (111) beladen ist, sowie einen freien Randstreifen (112), der sich entlang des ersten Längsrands erstreckt und der nicht mit dem Elektrodenmaterial beladen ist, auf;
d. Die negative Elektrode und die positive Elektrode sind derart ausgebildet und/oder innerhalb des Elektroden-Separator-Verbunds (100) zueinander angeordnet, dass der freie Randstreifen (122) des Anodenstromkollektors (120) eine der endständigen Stirnseiten und/oder der freie Randstreifen (112) des Kathodenstromkollektors (110) die andere der endständigen Stirnseiten des zylindrischen Wickels bilden.

3. Lithium-Ionen-Energiespeicherzelle nach Anspruch 2 mit mindestens einem der folgenden zusätzlichen Merkmale:
a. Der als zylindrischer Wickel ausgebildete Elektroden-Separator-Verbund (100) weist eine Stirnseite auf, die von einem Längsrand des Anodenstromkollektors (120), insbesondere dem freien Randstreifen (122) des Anodenstromkollektors, oder die von einem Längsrand des Kathodenstromkollektors (110), insbesondere dem freien Randstreifen (112) des Kathodenstromkollektors, gebildet wird;
b. Ein Längsrand des Anodenstromkollektors (120), insbesondere der freie Randstreifen (122) des Anodenstromkollektors, und/oder ein Längsrand des Kathodenstromkollektors (110), insbesondere der freie Randstreifen (112) des Kathodenstromkollektors, schließen einen Spalt mit spiralförmiger Geometrie ein;
c. Der eingerollte Längsrand (131, 141) des Separatorbandes (130, 140) ist in dem Spalt mit spiralförmiger Geometrie angeordnet und verschließt damit die von dem jeweiligen Längsrand des Anodenstromkollektors (120) oder des Kathodenstromkollektors (110) gebildete Stirnseite.
d. Lithium-Ionen-Energiespeicherzelle nach einem der vorhergehenden Ansprüche mit dem folgenden zusätzlichen Merkmal:
e. Der Längsrand (131, 141) des Separatorbandes ist über seine gesamte Länge eingerollt.

4. Lithium-Ionen-Energiespeicherzelle nach einem der vorhergehenden Ansprüche mit mindestens einem der folgenden zusätzlichen Merkmale:
a. Der mindestens eine Separator umfasst das Separatorband mit dem zumindest abschnittsweise eingerollten Längsrand (131) als erstes Separatorband (130);
b. Der mindestens eine Separator umfasst ein zweites Separatorband (140), das zwischen der positiven und der negativen Elektrode angeordnet ist und die Elektroden voneinander trennt;
c. Das zweite Separatorband (140) weist eine erste und eine zweite Flachseite auf, die jeweils einer der Elektroden zugewandt sind, sowie einen ersten Längsrand und einen zweiten Längsrand;
d. Auch das zweite Separatorband (140) weist auf einer seiner Flachseiten zumindest bereichsweise eine Beschichtung aus einem anorganischen Nichtleiter auf;
e. Mindestens einer der Längsränder (141) des zweiten Separatorbandes ist zumindest in einem Abschnitt eingerollt.

5. Lithium-Ionen-Energiespeicherzelle nach Anspruch 5 mit mindestens einem der folgenden zusätzlichen Merkmale:
a. Der Kathodenstromkollektor (110) und der Anodenstromkollektor (120) weisen jeweils einen ersten Längsrand und einen zweiten Längsrand auf;
b. Der Kathodenstromkollektor (110) weist einen streifenförmigen Hauptbereich, der mit einer Schicht aus dem positiven Elektrodenmaterial (111) beladen ist, sowie einen freien Randstreifen (112), der sich entlang des ersten Längsrands erstreckt und der nicht mit dem Elektrodenmaterial beladen ist, auf;
c. Der Anodenstromkollektor (120) weist einen streifenförmigen Hauptbereich, der mit einer Schicht aus dem negativen Elektrodenmaterial (121) beladen ist, sowie einen freien Randstreifen (122), der sich entlang des ersten Längsrands erstreckt und der nicht mit dem Elektrodenmaterial beladen ist, auf;
d. Die negative Elektrode und die positive Elektrode sind derart ausgebildet und/oder innerhalb des Elektroden-Separator-Verbunds (100) zueinander angeordnet, dass der freie Randstreifen (122) des Anodenstromkollektors aus einer der endständigen Stirnseiten und der freie Randstreifen (112) des Kathodenstromkollektors aus der anderen der endständigen Stirnseiten des Elektroden-Separator-Verbunds austreten;
e. Der freie Randstreifen (112) des Kathodenstromkollektors schließt einen ersten Spalt mit spiralförmiger Geometrie ein;
f. Der eingerollte Längsrand (131) des ersten Separatorbandes ist in dem ersten Spalt mit spiralförmiger Geometrie angeordnet und verschließt damit die von dem Randstreifen (112) des Kathodenstromkollektors gebildete Stirnseite des Elektroden-Separator-Verbunds;
g. Der freie Randstreifen (122) des Anodenstromkollektors schließt einen zweiten Spalt mit spiralförmiger Geometrie ein;
h. Der eingerollte Längsrand (141) des zweiten Separatorbandes ist in dem zweiten Spalt mit spiralförmiger Geometrie angeordnet und verschließt damit die von dem Randstreifen (122) des Anodenstromkollektors gebildete Stirnseite des Elektroden-Separator-Verbunds.

6. Lithium-Ionen-Energiespeicherzelle nach einem der vorhergehenden Ansprüche mit mindestens einem der folgenden zusätzlichen Merkmale:
a. Das mindestens eine Separatorband (130, 140) weist ausschließlich auf einer seiner Flachseiten die Beschichtung aus dem anorganischen Nichtleiter auf;
b. Das mindestens eine Separatorband (130, 140) weist ausschließlich entlang einem seiner Längsränder (131, 141) die Beschichtung aus dem anorganischen Nichtleiter auf;
c. Das mindestens eine Separatorband (130, 140) weist ausschließlich eine Flachseite auf, die vollflächig mit dem anorganischen Nichtleiter beschichtet ist.

7. Lithium-Ionen-Energiespeicherzelle nach einem der vorhergehenden Ansprüche mit mindestens einem der folgenden zusätzlichen Merkmale:
a. Die Beschichtung aus dem anorganischen Nichtleiter befindet sich auf der Flachseite des Separatorbandes (130, 140), die der positiven Elektrode zugewandt ist;
b. Die Beschichtung aus dem anorganischen Nichtleiter befindet sich auf der Flachseite des Separatorbandes (130, 140), die der negativen Elektrode zugewandt ist;
c. Der Längsrand des Separatorbandes (131, 141) ist derart eingerollt, dass die Beschichtung aus dem anorganischen Nichtleiter nach außen weist.

8. Lithium-Ionen-Energiespeicherzelle nach einem der vorhergehenden Ansprüche mit dem folgenden zusätzlichen Merkmal:
a. Die Beschichtung aus dem anorganischen Nichtleiter umfasst ein Material oder umfasst eine Kombination von Materialien, das/die aus der folgenden Gruppe ausgewählt ist/sind: keramisches Material, glaskeramisches Material, Glas, Lithiumionen-leitendes keramisches Material, oxidisches Material, metalloxidisches Material, Aluminiumoxid, Titanoxid, Titannitrid, Titanaluminiumnitrid, Siliziumoxid, Siliziumdioxid, Titancarbonitrid.

9. Lithium-Ionen-Energiespeicherzelle nach einem der vorhergehenden Ansprüche mit dem folgenden zusätzlichen Merkmal:
a. Die Lithium-Ionen-Energiespeicherzelle (1) umfasst mindestens ein Kontaktbauteil (13), das flach auf einer Stirnseite des als zylindrischer Wickel ausgebildeten Elektroden-Separator-Verbunds (100) aufsitzt.

10. Verfahren zur Herstellung einer Lithium-Ionen-Energiespeicherzelle (1) gemäß einem der Ansprüche 1 bis 10, wobei das Verfahren die folgenden Schritte umfasst:
a. Bereitstellung von mindestens einer bandförmigen positiven und mindestens einer bandförmigen negativen Elektrode, wobei die bandförmige positive Elektrode einen bandförmigen Kathodenstromkollektor (110) mit einer Beschichtung aus einem positiven Elektrodenmaterial (111) und die bandförmige negative Elektrode einen bandförmigen Anodenstromkollektor (120) mit einer Beschichtung aus einem negativen Elektrodenmaterial (121) umfasst;
b. Bereitstellung von mindestens einem Separatorband (130, 140) mit einer ersten Flachseite und mit einer zweiten Flachseite, wobei das Separatorband (130, 140) auf einer seiner Flachseiten zumindest bereichsweise eine Beschichtung aus einem anorganischen Nichtleiter aufweist;
c. Bildung eines als zylindrischer Wickel ausgebildeten Elektroden-Separator-Verbunds (100) aus den Elektrodenbändern, wobei das mindestens eine Separatorband (130, 140) zwischen der positiven und der negativen Elektrode angeordnet wird, so dass es die Elektroden voneinander trennt;
d. Einbringen des Elektroden-Separator-Verbunds (100) in ein zylindrisches Gehäuse (10, 11), wobei der Elektroden-Separator-Verbund (100) axial in dem Gehäuse angeordnet wird;
**dadurch gekennzeichnet, dass**
e. der Elektroden-Separator-Verbund (100) einer Wärmebehandlung unterzogen wird, derart, dass sich mindestens ein Längsrand (131, 141) des mindestens einen Separatorbandes (130, 140) zumindest abschnittsweise einrollt.

11. Verfahren nach Anspruch 10 mit mindestens einem der folgenden zusätzlichen Merkmale:
a. Für die Wärmebehandlung wird eine Temperatur in einem Bereich zwischen 200 °C und 700 °C angewendet;
b. Die Wärmebehandlung erfolgt unter Verwendung von Heißluft und/oder Infrarotstrahlung und/oder einem Laserstrahl.

12. Verfahren nach Anspruch 10 oder Anspruch 11 mit mindestens einem der folgenden zusätzlichen Merkmale:
a. Der Kathodenstromkollektor (110) der positiven Elektrode und/oder der Anodenstromkollektor (120) der negativen Elektrode weisen einen freien Randstreifen (112, 122) entlang einem ihrer Längsränder auf, der nicht mit dem Elektrodenmaterial beschichtet ist;
b. Nach der Bildung des Elektroden-Separator-Verbunds (100) bildet der freie Randstreifen (112) des Kathodenstromkollektors und/oder der freie Randstreifen (122) des Anodenstromkollektors eine der Stirnseiten des als zylindrischer Wickel ausgebildeten Elektroden-Separator-Verbunds (100);
c. Zur elektrischen Kontaktierung der positiven Elektrode und/oder der negativen Elektrode wird ein Kontaktbauteil (13) flach auf den freien Randstreifen des Kathodenstromkollektors (112) und/oder des Anodenstromkollektors (122) aufgelegt und dort fixiert;
d. Das Fixieren erfolgt durch Schweißen, insbesondere durch Laserschweißen.

13. Verfahren nach Anspruch 12 mit mindestens einem der folgenden zusätzlichen Merkmale:
a. Die Wärmebehandlung erfolgt über eine Einkopplung von Wärme über das Kontaktbauteil (13);
b. Die Wärmebehandlung erfolgt im Zuge der Kontaktierung der mindestens einen Elektrode.

14. Lithium-Ionen-Energiespeicherzelle (1), herstellbar nach einem Verfahren gemäß einem der Ansprüche 10 bis 13.
